# EUROPÄISCHE PATENTSCHRIFT

(11) **EP 0 600 384 B1**
(45) Veröffentlichungstag und Bekanntmachung des Hinweises auf die Patenterteilung: **27.03.1996**
(21) Anmeldenummer: 93119068.0
(22) Anmeldetag: 26.11.1993
(51) Int. Cl.: H02M 3/156

(54) **Netzteil**
Power supply
Alimentation

(30) Priorität: 01.12.1992 DE 4240264
(43) Veröffentlichungstag der Anmeldung: 08.06.1994
(73) Patentinhaber: LEGRAND GmbH, D-59494 Soest (DE)
(72) Erfinder: Baldus, Michael, D-59505 Bad Sassendorf (DE)
(74) Vertreter: Hanewinkel, Lorenz, Dipl.-Phys.

(56) Entgegenhaltungen:
- DE-A- 3 304 759
- GB-A- 2 208 019
- US-A- 4 792 746

## Beschreibung

Die Erfindung betrifft ein Netzteil mit einem Brückengleichrichter, der netzseitig gespeist eine ungeglättete Gleichspannung abgibt, mit einem dem Gleichrichter nachgeschalteten Schalttransistor, der einen verbraucherseitigen Siebkondensator und einen Verbraucher speist und der von einem Verstärker angesteuert ist, der über einen Vorwiderstand stabilisiert mit einer Zenerdiodenschaltung versorgt ist und der einerseits über einen Referenzzweig der eine Zenerdiode enthält, und andererseits über einen Spannungsteilerzweig abhängig von der ungeglätteten Spannung so angesteuert ist, daß der Schaltverstärker den Schalttransistor höchstens dann aufsteuert, wenn die ungeglättete Gleichspannung unter einer vorgegebenen Spannung liegt, und wobei von dem Verbraucher eine Diode spannungsrückführend mit dem Schaltverstärker eingangsschaltungsseitig so verbunden ist, daß der Schaltverstärker den Schalttransistor höchstens dann aufsteuert, wenn eine vorgegebene Niedervolt-Verbraucherspannung unterschritten ist.

Eine derartige Schaltung ist aus der DE 37 27 117 A1 vorbekannt. Sie hat den Vorteil, daß nur relativ geringe Verlustleistung in dem Längsschaltregelzweig auftritt, da nur bei relativ geringer Oberspannung der Schalter geöffnet gesteuert ist. Die vorbekannte Schaltung ist jedoch relativ bauteileaufwendig, da die Speiseschaltung des Schaltverstärkers außer der Abfangdiode einen Glättungskondensator enthält, der die Versorgungsspannung stabilisiert, weshalb der Widerstandsteilerzweig direkt von der unstabilisierten gleichgerichteten Spannung gespeist ist. Wegen der dadurch vorliegenden Spannungsverhältnisse ist die Rückkoppeldiode auf der Verbraucherseite mit einem Zenerdiodenzweig angekoppelt und in den Spannungsteilerpunkt des Widerstandsteilerzweiges eingespeist.

Weiterhin ist aus der DE 33 04 759 A1 eine Netzteilschaltung bekannt, bei der hinter der Gleichrichterbrückenschaltung zwei Schaltverstärker angeordnet sind, die für jeweils einen Halbwellenabschritt den Schalttransistor aufsteuern. Die Versorgungsspannung der beiden Schaltverstärker ist mit einer Zenerdiode und einem Glättungskondensator stabilisiert, eine Rückkopplung von der Verbraucherseite zu den Schaltverstärkereingängen fehlt, so daß nur eine Steuerung aber keine verbrauchsabhängige Regelung (Begrenzung) der Ausgangsspannung vorliegt.

Es ist Aufgabe der Erfindung, die eingangs bezeichnete Schaltung zu vereinfachen.

Die Lösung besteht darin, daß der Referenzzweig und der Spannungsteilerzweig eine Brückenschaltung bilden, die über den Vorwiderstand, lediglich abgefangen mit einer Abfangzenerdiodenschaltung, gespeist ist, deren Zenerspannung als Abfangspannung höher liegt als die Spannung über der Brückenschaltung beim Abschalten des Schalttransistors ist, und daß die spannungsrückkoppelnde Diode unmittelbar vom Verbraucher und dem damit verbundenen Schalttransistor zu dem Einspeisepunkt der genannten Brückenschaltung geschaltet ist.

Vorteilhafte Ausgestaltungen sind in den Unteransprüchen angegeben.

Die Schaltungsanordnung besteht im wesentlichen aus einer Gleichrichterschaltung, die vorzugsweise eine Brücke ist, einem Schalttransistor als Längsregelglied, einem Glättungskondensator, der parallel zum Verbraucher liegt, sowie einer Ansteuerschaltung des Schalttransistors, die eine Spannungsreferenzschaltung, z.B. eine Zenerdiode, umfaßt und einen Schaltverstärker enthält, der so angesteuert ist, daß er den Schalttransistor nur bei niedriger Oberspannung des Schalttransistors öffnet und bei hoher Oberspannung abschaltet, so daß ein Stromfluß durch den Schalttransistor jeweils nur bei niedriger Spannung an der Schaltstrecke, also mit geringer Verlustleistung erfolgt.

Der Oberspannungsbereich, bei dem der Stromfluß jeweils zulässig ist, wird beispielsweise auf das ein- oder zweifache der verbraucherseitgen Niedervoltspannung, in jedem Fall jedoch höher als diese, festgelegt. Demgemäß wird der Glättungskondensator so groß gewählt, daß bei den sich dadurch ergebenden relativ kurzen Stromflußzeiträumen zu Beginn und am Ende jeder Halbwelle der gleichgerichteten Wechselspannung eine den Erfordernissen entsprechend ausreichende Spannungsglättung erfolgt. Bei den häufig als Verbraucher verwendeten C-MOS-Schaltkreisen sind große Spannungstoleranzen zulässig; in anderen Fällen kann bei einer Nachglättung der Siebkondensator in seiner Größe reduziert werden, oder er kann als Notstromlieferant bei kurzem Netzausfall dienen.

Die Ansteuerschaltung des Schalttransistors besteht aus einem Schaltverstärker mit einer Eingangsbrücke, die in einem Zweig eine Zenerdiode enthält. Der Verstärker ist ein Schmitt-Trigger und hat demgemäß eine Hysterese, z.B. durch einen Mitkoppelwiderstand, damit keine undefinierten Übergangsschaltzustände auftreten. Die Brückenschaltung wird von der ungeglätteten Gleichspannung über einen Vorwiderstand gespeist, der auch den Verstärker mit Spannung versorgt. Damit bei den Nulldurchgängen der Halbwellenspannung keine undefinierten Betriebszustände an dem Schaltverstärker auftreten, ist vorteilhaft eine zusätzliche Einspeisung der Brücke und des Verstärkers von der Niederspannungsseite aus über eine entkoppelnde Diode vorgesehen.

Zur Vermeidung einer Überlastung der Brücke und des Verstärkers durch die Einspeisung mit der hohen ungeglätteten Spannung am Vorwiderstand, ist eine Abfang-Zenerdiode parallel zur Brücke oder in Reihe mit der Referenz-Zenerdiode vorgesehen.

In einer sehr preiswerten Schaltungsausgestaltung ist ein handelsübliches NOR-Gatter als Schaltverstärker eingesetzt, wobei der eine Brückenzweig, der die Lage der Schaltschwelle des Gatters relativ zu seiner Versorgungsspannung bestimmt, im Gatter integriert ist.

Selbstverständlich läßt sich die Schaltung bei einer Umordnung der Brückenelemente oder bei einer Undimensionierung der Brückenzweigverhältnisse fachmännisch abwandeln und statt des invertierenden Gatters oder Verstärkers ein nicht invertierender verwenden.

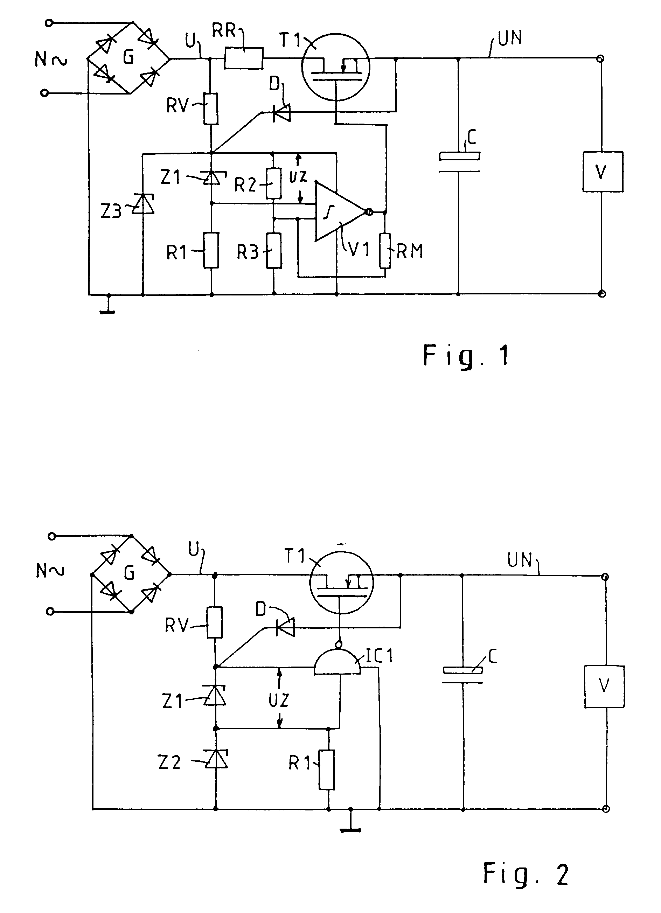

Vorteilhafte Ausgestaltungen sind in den Figuren 1 und 2 dargestellt.
Fig. 1 zeigt ein Netzteil mit einem Schaltverstärker;
Fig. 2 zeigt ein Netzteil mit einem Gatter.

Figur 1 zeigt eine erste Ausführung eines Netzteiles. Eingangsseitig ist ein Brückengleichrichter (G) angeordnet, der aus dem Wechselstromnetz (N) gespeist ist. Ausgangsseitig entsteht am Gleichrichter (G) eine Halbwellenspannung (U), deren Spitzenspannung bei gewöhnlicher Netzspannung ca. 300 V beträgt. Die Wechselspannung (U) wird über den Schalttransistor (T1), der ein Hochspannungs-MOS-FET-Transistor ist, über die Schaltstrecke auf den Niederspannungsteil (C, N) geführt. Durch eine geeignete Ansteuerung des Schalttransistors (T1) entsteht an dem Glättungskondensator (C) und dem Verbraucher (V) eine Niedervoltgleichspannung (UN) geringer Welligkeit. Falls der Verbraucher (N) ein integrierter Schaltkreis ist, beträgt die mittlere Niedervoltspannung beispielsweise 8 V.

Die Ansteuerschaltung des Schalttransistors (T1) besteht aus einem Schaltverstärker (V1), dessen Eingänge an eine Meßdiagonale einer Brückenschaltung (Z1, R1; R2, R3) geführt sind, deren Brückenzweige aus einer Referenz-Zenerdiode (Z1) und einem Brückenwiderstand (R1) sowie aus zwei weiteren Widerständen (R2, R3) bestehen. Die Brückenschaltung (Z1, R1; R2, R3) ist über einen Vorwiderstand (RV) mit der Halbwellenspannung (U) gespeist. Die Brücke ist in bezug auf den Vorwiderstand (RV) derart dimensioniert, daß der Schaltverstärker (V1) jeweils dann mit seinem invertierten Ausgangssignal den Schalttransistor (T1) öffnet, wenn die an dessen Schaltstrecke anliegende Spannung unter oder höchstens gleich einer höheren Spannung als der Niedervoltspannung (UN), z.B. bei einem ein- bis vierfachen derselben liegt.

Beispielsweise sind die Brückenwiderstände (R2, R3) jeweils gleich groß sind und wesentlich größer sind als der Brückenwiderstand (R1) im anderen Zweig ist, während der Vorwiderstand (RV) dreimal größer als der Brückenwiderstand (R1) ist, der mit der Referenz-Zenerdiode (Z1) in Serie liegt. Auf diese Weise ist der Schalttransistor (T1) jeweils immer dann abgeschaltet, wenn die Halbwellenspannung (U) größer als das fünffache der Zenerspannung (UZ) der Referenz-Zenerdiode (Z1) ist. Die Referenzspannung (UZ) beträgt beispielsweise 4 V, so daß über der Brücke 8 V liegen und über dem Vorwiderstand (12V).

Vorteilhaft ist eine Diode (D) vorgesehen, die die Niedervoltspannung (UN) dem Brückeneinspeisepunkt zuführt, so daß diese auch dann versorgt ist, wenn die Halbwellenspannung (U) nahe dem Wert Null liegt. Auf diese Weise wird verhindert, daß der Schaltverstärker (V1) in einen unerwünschten Zustand kommt. Der Schaltverstärker (V1) ist versorgungsmäßig parallel zur Brückenschaltung gelegt. Vorzugsweise besitzt er, als Schmitt-Trigger geschaltet, intern oder extern eine Mitkopplung z.B. über einen Mitkoppelwiderstand (RM), so daß er eine kleine Hysterese aufweist und stets vollständig durchschaltet.

Da diese Hysterese jeweils die völlige Durchschaltung des Schalttransistors (T1) erbringt, läßt sich dessen Verlustleistung vorteilhaft durch einen Reihenwiderstand (RR), der zweckkmäßig zustromseitig liegt, wesentlich verringern, also unter die Leistungsaufnahme des Verbrauchers (V) absenken. Vorteilhaft kann der Wert des Reihenwiderstandes (RR) ein Mehrfaches des Einschaltwiderstandes des Schalttransistors (T1) betragen.

Durch die Diode (D) steigt die Spannung an dem Glättungskondensator (C) somit maximal auf etwa 8,7 V an; das ist im Beispiel zweimal die Zenerdiodenspannung von 4 V plus die Diodenvorwärtsspannung von 0,7 V; da dann der Spannungsabfall an dem Brückenwiderstand (R1) gleich der Zenerspannung (UZ) ist, was dem Teilerverhältnis im anderen Brückenzweig entspricht. Der Spannungsabfall über dem Schalttransistor (T1) beträgt beim Abschalten gerade 12 V und ist ansonsten noch kleiner, so daß der Nachladestrom nur eine relativ geringe Verlustleistung erzeugt, die etwa der Verlustleistung im Verbraucher (N) entspricht oder, je nach Dimensionierung, insbesondere wenn der Reihenwiderstand (RR) vorgsehen ist, noch wesentlich geringer gehalten werden kann.

In einer vorteilhaften Weiterbildung ist über die Brückenschaltung eine Abfang-Zenerdiode (Z3) geschaltet, welche bei einer Zenerspannung von z.B. 12 V die Spannung der Brücke, die durch die Speisung durch den Vorwiderstand (RV) entsteht, begrenzt. Noch bevor die Abfangspannung erreicht ist, ist der Schalttransistor stets sicher abgeschaltet.

Selbstverständlich können die Brückenglieder, um die gleiche Funktion zu erbringen, auch diagonal vertauscht sein oder symmetrisch vertauscht sein, wobei im letzteren Fall der Verstärker invers anzuschließen ist.

Figur 2 zeigt eine zweite Ausgestaltung der Schaltung, bei der anstelle des Verstärkers (V1) ein invertierendes Gatter oder ein Inverterbaustein (IC1) verwandt ist. Hierbei befindet sich der eine Brückenzweig, der die Lage der Schaltspannung im Vergleich zur Versorgungsspannung bestimmt, innerhalb des käuflichen Gatterbausteines. Die Brückenschaltung ist ebenfalls mit einer Abfang-Zenerdiode (Z2) versehen, welche jedoch parallel zu dem Brückenwiderstand (R1) geschaltet ist, welcher in Reihe mit der Referenz-Zenerdiode (Z1) liegt. Die Abfang-Zenerdiode (Z2) weist einen höheren Zenerstrombedarf auf, als die Referenz-Zenerdiode, so daß die Abfangwirkung erst dann auftritt, wenn bereits die Brücke den Inverter (IC1) abschaltend beaufschlagt. Beispielsweise ist die Abfang-Zenerdiode (Z2) eine 6 V-Zenerdiode und die Referenz-Zenerdiode eine 4 V-Zenerdiode. Das NOR-Gatter (IC1) ist versorgungsseitig mit der Brückenspannung beaufschlagt. Im übrigen entsprechen die Bauteile, die die gleichen Referenzzeichen wie in Figur 1 aufweisen, den dort beschriebenen.

## Patentansprüche

1. Netzteil mit einem Brückengleichrichter (G), der netzseitig gespeist eine ungeglättete Gleichspannung (U) abgibt, mit einem dem Gleichrichter (G) nachgeschalteten Schalttransistor (T1), der einen verbraucherseitigen Siebkondensator (C) und einen Verbraucher (V) speist und der von einem Verstärker (V1, IC1) angesteuert ist, der über einen Vorwiderstand (RV) stabilisiert mit einer Zenerdiodenschaltung (Z3; Z1, Z2) versorgt ist und der einerseits über einen Referenzzweig (Z1, R1; Z1, Z2, R1) der eine Zenerdiode (Z1) enthält, und andererseits über einen Spannungsteilerzweig (R2, R3) abhängig von der ungeglätteten Spannung (U) so angesteuert ist, daß der Schaltverstärker (V1, IC1) den Schalttransistor (T1) höchstens dann aufsteuert, wenn die ungeglättete Gleichspannung (U) unter einer vorgegebenen Spannung liegt, und wobei von dem Verbraucher (V) eine Diode (D) spannungsrückführend mit dem Schaltverstärker (V1, IC1) eingangsschaltungsseitig so verbunden ist, daß der Schaltverstärker (V1, IC1) den Schalttransistor (T1) höchstens dann aufsteuert, wenn eine vorgegebene Niedervolt-Verbraucherspannung (UN) unterschritten ist, dadurch gekennzeichnet, daß der Referenzzweig (Z1, R1; Z1, R1) und der Spannungsteilerzweig (R2, R3) eine Brückenschaltung bilden, die über den Vorwiderstand (RV), lediglich abgefangen mit einer Abfangzenerdiodenschaltung (Z3; Z1, Z2), gespeist ist, deren Zenerspannung als Abfangspannung höher liegt als die Spannung über der Brückenschaltung (Z1, R1; R2, R3; Z1, Z2, R1) beim Abschalten des Schalttransistors (T1) ist, und daß die spannungsrückkoppelnde Diode (D) unmittelbar vom Verbraucher (V) und dem damit verbundenen Schalttransistor (T1) zu dem Einspeisepunkt der genannten Brückenschaltung (Z1, R1; R2, R3; Z1, Z2, R1) geschaltet ist.

2. Netzteil nach Anspruch 1, dadurch gekennzeichnet, daß der Verstärker (V1) hysteresebildend mitgekoppelt ist.

3. Netzteil nach Anspruch 1, dadurch gekennzeichnet, daß der eine Zweig (R2, R3) der Brückenschaltung aus zwei gleich großen Widerständen (R2, R3) besteht und in dem anderen Brückenzweig (Z1, R1), in dem die Referenz-Zenerdiode (Z1) liegt, ein Brückenwiderstand (R1) liegt, der so bemessen ist, daß bei einem Bruchteil der Zenerspannung der Referenz-Zenerdiode (Z1) über diesem ein solcher Speisestrom durch die Referenz-Zenerdiode (Z1) fließt, daß diese im Zenerdurchbruchbereich arbeitet.

4. Netzteil nach Anspruch 3, dadurch gekennzeichnet, daß der Vorwiderstand (RV) den ein- bis vierfachen Widerstandwert des Brückenwiderstandes (R1) aufweist.

5. Netzteil nach einem der vorstehenden Ansprüche, dadurch gekennzeichnet, daß der Schalttransistor (T1) ein Hochspannungs-MOS-FET-Transistor ist.

6. Netzteil nach einem der vorstehenden Ansprüche, dadurch gekennzeichnet, daß der Verstärker (IC1) eine integrierte invertierende Gatter- oder Inverterschaltung ist, die den einen Brückenzweig (R2, R3) umfaßt.

7. Netzteil nach einem der vorstehenden Ansprüche, dadurch gekennzeichnet, daß über den Brückenwiderstand (R1) die Abfang-Zenerdiode (Z2) geschaltet ist, deren Zenerspannung größer ist als die Zenerspannung der Referenz-Zenerdiode (Z1), die dazu in Reihe liegt, und daß der andere Brückenzweig aus zwei gleich großen Widerständen (R2, R3) besteht.

8. Netzteil nach Anspruch 1, dadurch gekennzeichnet, daß der eine Brückenzweig (Z1, Z2) aus zwei Zenerdioden (Z1, Z2) und der andere aus zwei gleich großen Widerständen (R2, R3) besteht und daß die eine der Zenerdioden (Z2) einen höheren Zenerdurchbruchstrom erfordert als die Referenz-Zenerdiode (Z1).

9. Netzteil nach einem der vorstehenden Ansprüche, dadurch gekennzeichnet, daß in Serie mit dem Schalttransistor (T1) ein Reihenwiderstand (RR) geschaltet ist

10. Netzteil nach Anspruch 9, dadurch gekennzeichnet, daß der Reihenwiderstand (RR) um ein Mehrfaches größer als der Ein-Widerstand des Schalttransistors (T1) ist.

## Claims

1. Power supply unit comprising a bridge rectifier (G) which transmits an unfiltered direct voltage (U) supplied on the mains side, a switching transistor (TI) connected in series with the rectifier (G), which switching transistor supplies a filter capacitor (C) and a consumer (V) on the consumer side and is controlled by an amplifier (V1, lC1), which is supplied in a stabilised manner via a series resistor (RV) with a zener diode circuit (Z3; Z1; Z2) and which comprises on the one hand via a reference branch (Z1, R1; Z1, Z2, R1) a zener diode (Z1) and is on the other hand controlled in such a manner via a voltage divider branch (R2, R3), dependent on the unfiltered voltage (U), that the switching amplifier (V1, lC1) turns the switching transistor (T1) up to the maximum setting if the unfiltered direct voltage (U) is below a predetermined voltage, and wherein a diode (D) is connected by the consumer (V) to the input of the switching amplifier (V1, lC1) so as to feed back voltage and in such a manner that the switching amplifier (V1, lC1) switches the switching transistor (T1) up to the maximum if the level is below a predetermined low consumer voltage (UN), characterised in that the reference branch (Z1, R1; Z1, R1) and the voltage divider branch (R2, R3) form a bridge circuit, which is supplied intercepted only via the series resistor (RV) with an intercepting zener diode circuit (Z3; Z1, Z2), whose zener voltage is higher as an interception voltage than the voltage through the bridge circuit (Z1, R1; R2, R3; Z1, Z2, R1) on disconnection of the switching transistor (T1), and in that the diode (D) for voltage feedback is switched directly by the consumer (V) and the associated switching transistor (T1) to the input point of the bridge circuit (Z1, R1; R2, R3; Z1, Z2, R1).

2. Power supply unit according to claim 1, characterised in that the amplifier (V1) is so coupled as to give rise to hysteresis.

3. Power supply unit according to claim 1, characterised in that one branch (R2, R3) of the bridge circuit is composed of two resistors (R2, R3) of equal size and a bridge resistor (R1) - which is so dimensioned that, at a fraction of the zener voltage of the reference zener diode (Z1), a supply current flows through the reference zener diode (Z1), such that the reference zener diode (Z1) operates in the zener breakdown range - is connected in the other bridge branch (Z1, R1) in which the reference zener diode (Z1) is connected.

4. Power supply unit according to claim 3, characterised that the series resistor (RV) has one to four times' the resistance of the bridge resistor (R1).

5. Power supply unit according to one of the preceding claims, characterised in that the switching transistor (T1) is a high-voltage MOSFET transistor.

6. Power supply unit according to one of the preceding claims, characterised in that the amplifier (IC1) is an integrated, inverting gate or inverting circuit comprising a bridge branch (R2, R3).

7. Power supply unit according to one of the preceding claims, characterised in that the interception zener diode (Z2) is switched via the bridge resistor (R1), its zener voltage being higher than the zener voltage of the reference zener diode (Z1) in series therewith, and in that the other bridge branch consists of two resistors (R2, R3) of equal size.

8. Power supply unit according to claim 1, characterised in that the one bridge branch (Z1, Z2) consists of two zener diodes (Z1, Z2) and the other consists of two resistors (R2, R3) of equal size, and in that one of the zener diodes (Z2) requires a higher zener breakdown current than the reference zener diode (Z1).

9. Power supply unit according to one of the preceding claims, characterised in that a series resistor (RR) is connected in series with the switching transistor (T1).

10. Power supply unit according to claim 9, characterised in that the series resistor (RR) is several times larger than the single resistor of the switching transistor (T1).

## Revendications

1. Bloc d'alimentation comprenant un redresseur à pont (G) alimenté par le réseau et délivrant une tension continue, non filtrée et un transistor de commutation (T1) connecté en aval du redreseur à pont (G) et alimentant un condensateur filtre (C) ainsi qu'un consommateur (V) tout en étant commandé par un amplificateur (V1, IC1) qui est stabilisé par l'intermédiaire d'une résistance connectée en amont (RV), desservi par un montage de diodes zener (Z3; Z1, Z2) et commandé en dépendance de la tension continue, non filtrée (U), ceci, d'une part, par l'intermédiaire d'une brannche de référence (Z1, R1; Z1, Z2, R1) comprenant une diode zener (Z1) et, d'autre part, par l'intermédiaire d'une branche de diviseur de tension (R2, R3), de sorte que l'amplificateur (V1, IC1) connecte le transistor de commutation (T1) tout au plus lorsque la tension continue, non filtrée (U) est inférieure à une tension prédéterminée, une diode (D) étant reliée, avec réaction de tension, à l'amplificateur (V1, IC1), côté entrée, de sorte que l'amplificateur (V1, IC1) connecte alors le transistor de commutation (T1) tout au plus quand une basse tension de consommation (UN) est souspassée,
caractérisé en ce que
la branche de référence (Z1, R1; Z1, Z2, R1) et la branche de séparateur de tension (R2, R3) forment un circuit en pont qui est seulement atténué, par l'intermédiaire de la prérésistance (RV), avec un montage de diode d'atténuation (Z3; Z1, Z2), dont la tension zener, en tant que tension d'atténuation, est supérieure à la tension par le circuit en pont (Z1, R1; R2, R3; Z1, Z2, R1) lors de la mise hors de circuit du transistor de commutation (T1), et que la diode à réaction de tension (D) est connectée du consommateur (V) et du transistor de commutation (T1) y relié directement au point d'alimentation du circuit en pont mentionné (Z1, R1; R2, R3; Z1, Z2, R1).

2. Bloc d'alimentation selon la revendication 1,
caractérisé en ce que
l'amplificateur (V1) est co-couplé en formant une hystérésis.

3. Bloc d'alimentation selon la revendication 1,
caractérisé en ce que
la branche (R2, R3) du circuit en pont est composée de deux résistances de même valeur (R2, R3) et que l'autre branche (Z1, R1) du circuit en pont, dans laquelle se trouve la diode Zener de référence (Z1), comprend une résistance de pont (R1) calculée de sorte qu'à une fraction de la tension Zener de la diode Zener de référence (Z1), un courant d'alimentation coule, par son intermédiaire, à travers la diode Zener de référence (Z1) qui fonctionne alors dans le domaine de claquage par effet Zener.

4. Bloc d'alimentation selon la revendication 3,
caractérisé en ce que
la prérésistance (RV) a une valeur pouvant aller jusqu'au quadruple de celle de la résistance de pont (1).

5. Bloc d'alimentation selon l'une des revendications précédentes,
caractérisé en ce que
le transistor de commutation (T1) est un transistor haute tension MOS-FET.

6. Bloc d'alimentation selon l'une des revendications précédentes,
caractérisé en ce que
l'amplificateur (IC1) comprend un montage à grille ou à inverseur intégré, inversant, qui embrasse la branche de pont (R2, R3).

7. Bloc d'alimentation selon l'une des revendications précédentes,
caractérisé en ce que,
la diode Zener d'atténuation (Z2) est connectée par l'intermédiaire de la résistance de pont (R1), la tension Zener de cette diode étant supérieure à la tension Zener de la diode Zener de référence (Z1), placée en série, et que l'autre branche du pont est composée de deux résistances (R2, R3) égales.

8. Bloc d'alimentation selon la revendication 1,
caractérisé en ce que
l'une des branches de pont (Z1, Z2) est composée de deux diodes Zener (Z1, Z2) et l'autre de deux résistances (R2, R3) de même valeur et que l'une des diodes Zener (Z2) exige un courant de claquage par effet Zener plus élevé que la diode Zener de référence (Z1).

9. Bloc d'alimentation selon l'une des revendications précédentes,
caractérisé en ce qu'
une résistance en série (RR) est connectée en série avec le transistor de commutation (T1).

10. Bloc d'alimentation selon la revendication 9,
caractérisé en ce que
la résistance en série (RR) est plusieurs fois supérieure à la résistance de fonctionnement du transistor de commutation (T1).9
